# EUROPEAN PATENT SPECIFICATION

(11) **EP 1 457 366 B1**
(45) Date of publication and mention of the grant of the patent: **21.06.2006**
(21) Application number: 04251216.0
(22) Date of filing: 02.03.2004
(51) Int. Cl.: B60H 1/00, B60H 1/32

(54) **Air conditioning system for vehicles**
Kraftfahrzeugklimaanlage
Système de climatisation pour véhicules

(30) Priority: 14.03.2003 JP 2003069571
(43) Date of publication of application: 15.09.2004
(73) Proprietor: Sanden Corporation, Isesaki-shi, Gunma 372-8502 (JP)
(72) Inventor: Ikeda, Susumu Sanden Corporation, Isesaki-shi Gunma, 372-8502 (JP); Nabeta, Yukio Sanden Corporation, Isesaki-shi Gunma, 372-8502 (JP); Ohtsuki, Yutaka Sanden Corporation, Isesaki-shi Gunma, 372-8502 (JP)
(74) Representative: Haley, Stephen

(56) References cited:
- DE-A- 3 223 812
- DE-A- 10 042 683
- DE-U- 29 616 598
- FR-A- 2 700 502
- US-A- 4 604 873

## Description

The present invention relates to an air conditioning system for vehicles, and, more specifically, to an air conditioning system for vehicles suitable to be mounted in a cabin of a work vehicle, etc. in which an air conditioning unit having an air path is made small, particularly, made thin.

Various technologies for making an air conditioning system for vehicles, in particular, an air conditioning unit having a heat exchanger for absorbing heat and a heat exchanger for radiating heat smaller are known. For example, WO99/07568 discloses a structure of an air conditioning unit for usual vehicles, wherein a vertical type unit is formed, and a heat absorbing heat exchanger and a heat radiating heat exchanger are compactly disposed therein at inclined conditions.

On the other hand, although an air conditioning unit for work vehicles is frequently disposed in a cabin as a room unit, accompanying with recent miniaturization of a cabin space, requirements for making the size of the unit smaller and the level of noise thereof lower while satisfying enough air conditioning function have been increased. Especially, a room unit to be installed at a layout condition under a seat is frequently required in order to utilize a space under the seat in a cabin, and in such a case, particularly the room unit is required to be made smaller, in particular, thinner. Further, even in an air conditioning unit for work vehicles, the noise level has been required to be further decreased from the viewpoints of recent requirements for improving the working environment and the comfortableness or from the backgrouhd of recent European restriction.

With respect to such an air conditioning system for work vehicles for which the above-described requirements have been increased, although it is considered to apply the aforementioned air conditioning unit for usual vehicles in order to make the unit smaller, because this air conditioning unit is formed as a vertical type unit, it is difficult in practice to apply the unit for installation in a cabin of a work vehicle requiring a thin type structure. As an air conditioning unit capable of achieving a thin type structure such as a structure required for work vehicles, for example, also known is a structure wherein a serpentine type heat exchanger is disposed at a condition of a horizontal figure as a heat exchanger for absorbing heat, thereby making the whole of the unit thin. However, in such a case where a serpentine type heat exchanger is used, because the refrigerant tube of a serpentine type heat exchanger, which is originally to be disposed vertically, is disposed at a style being inclined by 90 degrees, the water dripping property for condensed water may deteriorate, originating therefrom the air-flow resistance may increase, the noise of the air flow may increase, and therefore, the original target performance may not be exhibited. As a result, it may be necessary to use a heat exchanger having a larger heat exchanging capacity, and consequently, it may not be achieved to make the unit small and the noise level low.

On the other hand, JP-A-2003-11655 discloses a structure wherein a heat exchanger for absorbing heat is disposed in an air path at an inclined condition in order to make the air conditioning system for work vehicles small. In this structure, however, because a heat exchanger for radiating heat is disposed at an inclined condition in a direction different from the direction of the heat absorbing heat exchanger by 90 degrees, it is hard for air to be discharged from the surface of the face of the heat radiating heat exchanger, and the structure is hard to achieve a good air mixing at the downstream side of the heat radiating heat exchanger. Consequently, the performance of the air conditioning system may be decreased.

It would be desirable to provide an air conditioning system for vehicles, in particular, suitable for work vehicles, which can make an air conditioning unit containing a heat exchanger for absorbing heat and a heat exchanger for radiating heat in an air path small, particularly, thin greatly, and which can exhibit a heat exchanging performance to be required sufficiently and also can achieve a low noise level.

US-A-4604873 discloses an air conditioning unit for automobiles in both a heat absorbing and heat radiating exchanger with bypass or positioned therebetween. FR-A-2700502 discloses an air conditioning unit with both heat absorbing and heat radiating heat exchangers, both of which are angled with respect to air flow pass direction. DE-A-3223812 discloses an air conditioning system with angled sump.

According to the present invention there is provided an air conditioning system for vehicles having an air conditioning unit which has an air path extending about in a horizontal direction relative to a vehicle, a heat exchanger for absorbing heat and a heat exchanger radiating heat being disposed in said air path in this order, a flow rate of air bypassing or passing through said heat radiating heat exchanger relative to the whole amount of air after passing through said heat absorbing heat exchanger being adjusted by an air mixing door to obtain a desired discharged air temperature, characterized in that said heat absorbing heat exchanger is disposed so as to be inclined relative to an extending direction of said air path, and said heat radiating heat exchanger is disposed to be inclined in the same direction as that of said heat absorbing heat exchanger, and by
a drain guide groove provided at least on an inner wall of said air path positioned at a bottom side of said heat absorbing heat exchanger, wherein said drain guide groove is provided at each side in a width direction of said air path on said inner wall of said air path positioned at said bottom side of said heat absorbing heat exchanger so as to extend along a longitudinal direction of said air path, and an inner wall of said air path between both drain guide grooves protrudes into said air path so that a central portion thereof becomes higher.

In this air conditioning system for vehicles, it is preferred that the heat absorbing heat exchanger is disposed to be inclined at an angle in a range of 15 to 30 degrees relative to the extending direction of the air path. If the inclination angle is less than 15 degrees, the water dripping property for condensed water may be insufficient, and the air-flow resistance may become too great. If the inclination angle is more than 30 degrees, the effect for making the air conditioning unit thinner may become poor.

By setting the inclination angle within an adequate range, since the condensed water generated at a portion of the heat absorbing heat exchanger can flow down well along the heat absorbing heat exchanger, in the present invention, it is preferred that a drain guide groove capable of draining the condensed water is provided at least on an inner wall of the air path positioned at a bottom side of the heat absorbing heat exchanger.

Particularly, it is preferred that the central portion of the inner wall of the air path is connected to both drain guide grooves via gentle slopes.

Further, it is preferred that a portion projected into the air path is provided on an inner wall of the air path positioned at a bottom side of the heat absorbing heat exchanger, at a position corresponding to a position of each of a front end and a rear end of an area disposed with the heat absorbing heat exchanger, that is, at positions immediately before and immediately after the area disposed with the heat absorbing heat exchanger. By such a structure, the condensed water flown down is appropriately stored between both projected portions, and by providing the above-described drain guide grooves, the stored water may be properly drained.

Moreover, it is preferred that the above-described heat absorbing heat exchanger is a stacking type heat exchanger in which flat heat transfer tubes and fins are alternately stacked and both ends of respective heat transfer tubes are connected to tanks, respectively. The flat heat transfer tube may be formed, for example, from a pair of plates. By using such a stacking type heat exchanger, even in a case of the inclined disposition, a sufficiently good heat exchanging property can be maintained, and by the inclined disposition, the area for air flow may be ensured sufficiently large and it becomes to achieve low air-flow resistance and low noise level.

Furthermore, in the air conditioning system for vehicles according to the present invention, a structure can be employed, wherein air discharge ports communicating with temperature controlled air discharge ports provided on respective parts of a vehicle are provided at a downstream end of the air path, and all air discharge ports are opened about toward a horizontal direction relative to the vehicle. By this structure, respective ducts, for sending temperature controlled air to the temperature controlled air discharge ports provided on respective parts of the vehicle, may be connected to the air conditioning unit within substantially same horizontal positional area, and as compared with a case where these ducts are disposed vertically and connected, the whole of the air conditioning system including the duct connection structure may be made thin.

The air conditioning system for vehicles according to the present invention, which is thus made thin, is suitable as that for work vehicles. Namely, the air conditioning system is suitable to be applied for a case where the air conditioning unit is installed in a cabin of a work vehicle.

In the air conditioning system for vehicles according to the present invention thus constructed, since the heat absorbing heat exchanger provided so as to cross the whole of the air path is disposed to be inclined relative to the direction of the air path extending in the horizontal direction, this part of the air path may be small in height, and the air conditioning unit may be made thin. In addition, in the present invention, because the heat radiating heat exchanger is also disposed to be inclined in the same inclination direction as that of the heat absorbing heat exchanger relative to the extending direction of the air path, even in this part of the heat radiating heat exchanger, the area for heat exchange of the heat radiating heat exchanger, within which air passes through the heat radiating heat exchanger, may be ensured sufficiently large, and at the same time, the height of this part may be small, and as a result, the whole of the air conditioning unit may be made thin. Moreover, by setting the inclination direction of the heat radiating heat exchanger at the same direction as the inclination direction of the heat absorbing heat exchanger, air having passed through the heat absorbing heat exchanger may be smoothly to the entrance surface of the heat radiating heat exchanger or a bypass path, and therefore, reduction of the air conditioning performance and increase of pressure loss due to the air passage substantially do not occur. Therefore, while a desirable performance may be ensured, the air conditioning system may be made small, particularly, made thin.

Further, by disposing the heat absorbing heat exchanger to be inclined, even if the air conditioning unit is made thin, the size of the heat absorbing heat exchanger itself, in particular, the size of the heat exchange portion thereof can be ensured to be sufficiently large, a target heat absorbing property may not be damaged, and rather than that, the area for air passage may be enlarged. Therefore, reduction of air-flow resistance may become possible, thereby achieving a low noise level. Especially, by using a stacking type heat exchanger, while the reduction of air-flow resistance and the low noise level can be achieved, a desirable thin air conditioning unit can be formed.

Further, by setting the inclination angle of the heat absorbing heat exchanger at an angle in the optimum range (15 to 30 degrees), because a good water dripping property may be maintained while the thin structure is achieved, an increase of air-flow resistance associated with a poor water dripping property and an increase of the noise level originating therefrom may be appropriately prevented. By providing drain guide groove(s), draining may be appropriately performed.

Thus, in the present invention, while a desirable heat exchanging performance can be exhibited, the air conditioning unit can be made thin, and further, reduction of air-flow resistance and decrease of the noise level may be possible. By the reduction of air-flow resistance, a blower also may be small-sized, and a cost down thereof may be possible.

The air conditioning unit thus made thin is suitable as a room unit installed in a cabin of a work vehicle. Even in manufacture of an air conditioning system for work vehicles, by disposing the heat absorbing heat exchanger and the heat radiating heat exchanger to be inclined as described above, without particularly developing, designing and manufacturing small-sized heat exchangers for work vehicles, it becomes possible to use heat exchangers for usual vehicles, which are manufactured in a manner of mass production, and contain them in the air conditioning unit made thin, and therefore, a great shortening of the terms for the development and the designing becomes possible and a great cost down as a whole becomes possible.

Further features and advantages of the present invention will be understood from the following detailed description of the preferred embodiment of the present invention with reference to the accompanying figures, of which:
Fig. 1 is a schematic vertical sectional view of an air conditioning unit of an air conditioning system for vehicles according to an embodiment of the present invention.
Fig. 2 is a cross-sectional view of the air conditioning unit depicted in Fig. 1, as viewed along II-II line of Fig. 1.

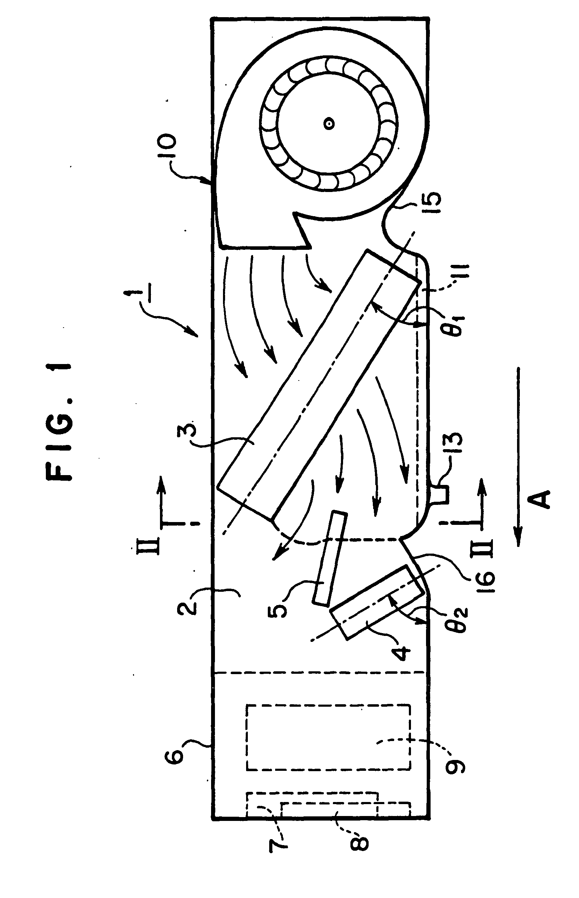

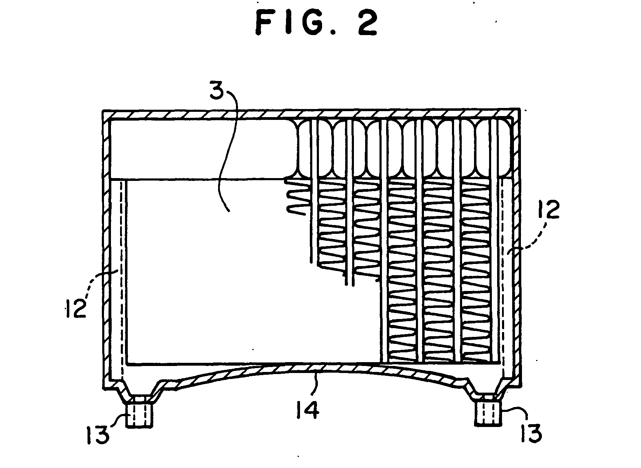

Figs. 1 and 2 show an air conditioning system for vehicles according to an embodiment of the present invention, in particular, the whole structure of a portion of an air conditioning unit thereof. This air conditioning unit is disposed, for example, under a seat in a cabin of a work vehicle.

In Fig. 1, air conditioning unit 1 has an air path 2 extending about in a horizontal direction relative to a vehicle (for example, a work vehicle). Therefore, a direction of air flow A in this air path 1 also becomes about the horizontal direction as a whole. In air path 1, an evaporator 3 as a heat exchanger for absorbing heat and a heater core 4 as a heat exchanger for radiating heat are disposed in this order in the air flow direction. Although evaporator 3 is disposed so as to cross the whole of air path 2, heater core 4 is disposed so as to partially cross the air path 2. An air mixing door 5 capable of being adjusted in its opening degree is provided at a position upstream or downstream of heater core 4 or at both positions (in this embodiment, at a position upstream of heater core 4). By adjusting the opening degree of air mixing door 5, a flow rate of air bypassing or passing through heater core 4 to the whole amount of air having passed through evaporator 3 can be adjusted. By this adjustment, the cooled air having passed through evaporator 3 is either passed through the bypass passage as it is, or mixed with air having been warmed by heater core 4 at a predetermined rate, thereby obtaining a desired discharge air temperature.

The temperature controlled air is sent into an air distribution box 6 provided at a downstream end portion of air path 2, and further mixed there and then sent out toward respective temperature controlled discharge air ports provided on respective parts of a vehicle (not shown, for example, temperature controlled discharge air ports for VENT, DEF and FOOT modes) via respective air discharge ports 7, 8 and 9 opened toward the horizontal direction. Respective dampers capable of being independently opened/closed are provided to the respective air discharge ports (not shown).

On the other hand, a blower 10 is provided at a position upstream of evaporator 3 in air path 2. Air suction port to blower 10 may be appropriately provided depending upon requirements from the vehicle side, such as at a position of a side surface side or a rear surface side of air conditioning unit 1. For example, in a case where a double-shaft type blower is used as blower 10, the air suction port may be opened on each of both side surfaces of air conditioning unit 1.

In this embodiment, a double-shaft type blower is used as blower 10, and by a multi-blade fan provided in blower 10, air is sent toward the side of evaporator 3 through an inner air path formed along an involute curve of a blower casing of blower 10.

Evaporator 3 is formed as a stacking type heat exchanger wherein flat heat transfer tubes (for example, each formed by a pair of plates) and fins are alternately stacked and both ends of the respective heat transfer tubes are connected to respective tanks. This evaporator 3 is disposed so as to be inclined at an inclination angle θ₁ in a range of 15 to 30 degrees relative to the extending direction (horizontal direction) of air path 2.

Further, in this embodiment, heater core 4 is disposed also so as to be inclined in the same inclination direction as that of evaporator 3 relative to the extending direction of air path 2. The inclination angle θ₂ of heater core 4 is not particularly restricted, and the inclination angle θ₂ may be set so that sufficiently large areas for the air passage of heater core 4 and the bypass passage, even if air conditioning unit 1 is made thin.

Furthermore, in this embodiment, drain guide grooves 11 are provided on the inner wall of air path 2 positioned at the bottom side of evaporator 3 for draining the condensed water flowing down along the evaporator 3. As shown in Fig. 2, evaporator 3 is held at both sides thereof by evaporator holders 12 which are formed by protruding the both inner side walls of air path 2 toward the inside.

Drain guide grooves 11 are provided at both sides in the width direction of air path 2 on the inner wall of air path 2 at the bottom side of evaporator 3 so as to extend along the longitudinal direction of air path 2. Drain ports 13 are provided at appropriate positions of respective drain guide grooves 11. Further, the inner wall of air path 2 between both drain guide grooves 11 protrude into air path 2 so that the central portion thereof becomes higher, and the central portion is formed as a convex portion 14. By forming this convex portion 14, the water flown down may be smoothly flown into drain guide grooves 11 positioned at both sides. Particularly, it is preferred that convex portion 14 at the central portion of the inner wall of air path 2 is connected to both drain guide grooves 11 via gentle slopes. By such a structure, as compared with a conventional structure of an air conditioning casing wherein a single drain port is provided at a central position and therefore a relatively deep concave structure is provided to the bottom of the casing to concentrate the drain to the drain port, because the condensed water may be surely guided to drain guide grooves 11 positioned at both sides of the bottom of the air conditioning unit and surely drained even if the inclination height of the central portion of the unit casing is suppressed to be small, a thinner structure can be achieved in the height direction. Further, even in a case where an air conditioning operation is continued under a condition in that a vehicle body is inclined particularly as in a work vehicle, the condensed water may be guided to any one of both drain guide grooves 11, and therefore, the water may be surely drained.

Further, in this embodiment, portions 15 and 16 projected into air path 2 are formed on the inner wall of air path 2 positioned at the bottom side of evaporator 3, at positions corresponding to a front end and a rear end of an area disposed with evaporator 3. By forming these projected portions 15 and 16, water may be appropriately stored between both projected portions 15 and 16, and at the same time, the water may be prevented from being flown over both projected portions 15 and 16. The water thus stored appropriately can be drained smoothly from drain ports 13 via the above-described structure of convex portion 14 and drain guide grooves 11 provided on both sides in the width direction.

In air conditioning unit 1 thus constructed according to this embodiment, because evaporator 3 and heater core 4 are disposed to be inclined, while the evaporator 3 and the heater core 4 are given with necessary and sufficient sizes, respectively, it is possible to make the air conditioning unit 1 remarkably thin (small). Particularly, in this embodiment, since evaporator 3 is inclined in a direction which can receive the air flow sent from blower 10, which is formed as a double-shaft type blower, along the involute curve smoothly as it is, there is almost no increase of air-flow resistance due to the inclination disposition. Rather than that, because the area for air passage (heat exchanging portion) of evaporator 3 can be sufficiently enlarged by the inclination disposition, it becomes possible to greatly decrease the air-flow resistance of evaporator 3. Such a decrease of air-flow resistance induces decrease of the level of noise associated with the air flow, and therefore, reduction of noise may also be achieved. Further, by ensuring a sufficiently large area of the heat exchanging portion of evaporator 3, the ability of evaporator 3 may be maintained at a sufficient high level. By using a stacking type heat exchanger as evaporator 3, a desirable performance may be easily exhibited. Furthermore, by reducing the air-flow resistance of evaporator 3, it becomes possible to employ a smaller blower as blower 10, thereby making air conditioning unit 1 further small and reducing the cost of the unit.

Further, since heater core 4 is inclined in the same direction as the inclination direction of evaporator 3 relative to the extending direction of air path 2, the air having passed through evaporator 3 is sent to the entrance surface of heater core 4 smoothly as it is without accompanying a great pressure loss, and the rate of the amount of air passing through heater core 4 to the amount of air bypassing heater core 4 may be easily set by air mixing door 5. Namely, while a good air conditioning performance can be maintained, air conditioning unit 1 can be made thin even in this portion of heater core 4 with no problems, and it becomes possible to make the whole of air conditioning unit 1 small and reduce the cost of manufacture thereof.

Further, in this embodiment, evaporator 3 is inclined at an angle within a range of 15 to 30 degrees relative to the extending direction of air path 2 (horizontal direction), by setting the inclination angle at 15 degrees or more, a sufficiently good water dripping property may be ensured, and by setting the inclination angle at 30 degrees or less, a thin structure of air conditioning unit 1, particularly a thin structure required for a work vehicle, may be achieved sufficiently. Further, by ensuring the good water dripping property, the noise level may be further reduced.

Further, by providing drain guide grooves 11 at least on the inner wall of air path positioned at the bottom side of evaporator 3 for evaporator 3 in which the above-described good water dripping property is ensured, the condensed water flown down along evaporator 3 may be drained to outside of the system well and adequately. Besides, by providing convex portion 14 and projected portions 15 and 16, the water may be drained further smoothly.

Furthermore, in this embodiment, since respective air discharge ports 7, 8 and 9 of air distribution box 6 provided at the downstream end of air path 2 are disposed in the horizontal direction, even if ducts communicating with temperature controlled air discharge ports provided at respective parts of a vehicle are connected to the respective air discharge ports 7, 8 and 9, it may be avoided that these connecting portions damage the thinning of air conditioning unit 1. Therefore, thinning of the whole of the air conditioning system including these connecting portions may be surely carried out.

Such a thin air conditioning unit 1 is suitable particularly for work vehicles, and while a desirable performance can be maintained, the layout for disposing the unit 1 under a seat in a cabin of a work vehicle can be easily designed.

## Claims

1. An air conditioning system for vehicles having an air conditioning unit (1) which has an air path (2) extending about in a horizontal direction relative to a vehicle, a heat exchanger (3) for absorbing heat and a heat exchanger (4) radiating heat being disposed in said air path in this order, a flow rate of air bypassing or passing through said heat radiating heat exchanger relative to the whole amount of air after passing through said heat absorbing heat exchanger being adjusted by an air mixing door (5) to obtain a desired discharged air temperature, wherein said heat radiating heat exchanger (4) is disposed so as to be inclined relative to an extending direction of said air path, **characterized in that** said heat absorbing heat exchanger (3) is disposed to be inclined in the same direction as that of said heat radiating heat exchanger, and by
a drain guide groove (11) provided at least on an inner wall (14) of said air path (2) positioned at a bottom side of said heat absorbing heat exchanger (3), wherein said drain guide groove (11) is provided at each side in a width direction of said air path (12) on said inner wall of said air path positioned at said bottom side of said heat absorbing heat exchanger (3) so as to extend along a longitudinal direction of said air path, and an inner wall of said air path between both drain guide grooves protrudes into said air path so that a central portion (14) thereof becomes higher.

2. The air conditioning system for vehicles according to claim 1, wherein said heat absorbing heat exchanger (3) disposed to be inclined at an angle in a range of 15 to 30 degrees relative to said extending direction of said air path (2).

3. The air conditioning system for vehicles according to claim 1, wherein said central portion (14) of said inner wall of said air path (2) connected to both drain guide grooves via gentle slopes.

4. The air conditioning system for vehicles according to any of claims 1 to 3, wherein a portion (15,16) projecting into said air path (2) provided on an inner wall of said air path positioned at a bottom side of said heat absorbing heat exchanger (3) at a position corresponding to a position of each of a front end and a rear end of an area disposed with said heat absorbing heat exchanger (3).

5. The air conditioning system for vehicles according to any of claims 1 to 4, wherein said heat absorbing heat exchanger (3) is a stacking type heat exchanger in which flat heat transfer tubes and fins are alternately stacked and both ends of respective heat transfer tubes are connected to tanks, respectively.

6. The air conditioning system for vehicles according to any of claims 1 to 5, wherein air discharge ports (7,8,) communicating with temperature controlled air discharge ports provided on respective parts of said vehicle are provided at a downstream end of said air path, and all air discharge ports are opened about toward said horizontal direction relative to said vehicle.

7. The air conditioning system for vehicles according to any of claims 1 to,7, wherein said air conditioning unit is installed in a cabin of a work vehicle.

## Patentansprüche

1. Klimaanlage für Fahrzeuge mit
einer Klimatisierungseinheit (1), die einen Luftpfad (2) aufweist, der sich ungefähr in einer horizontalen Richtung relativ zu einem Fahrzeug erstreckt,
einem Wärmetauscher (3) zum Absorbieren von Wärme und einem Wärmetauscher (4), der Wärme strahlt, die in dem Luftpfad in dieser Reihenfolge vorgesehen sind,
wobei eine Flußrate von Luft, die an dem wärmestrahlenden Wärmetauscher vorbei geht oder durch ihn durch geht, relativ zu dem Gesamtbetrag von Luft nach dem Durchgehen durch den wärmeabsorbierenden Wärmetauscher durch eine Luftmischtür (5) zum Erzielen einer gewünschten Ausgabelufttemperatur einstellbar ist,
worin der wärmestrahlende Wärmetauscher (4) so vorgesehen ist, daß er relativ zu einer Erstreckungsrichtung des Luftpfades geneigt ist,
**dadurch gekennzeichnet,**
**daß** der wärmeabsorbierende Wärmetauscher (3) so vorgesehen ist, daß er in der gleichen Richtung wie die des wärmestrahlenden Wärmetauschers geneigt ist, und
**gekennzeichnet durch**
eine Abflußführungsrille (11), die mindestens auf einer Innenwand (14) des Luftpfades (2) vorgesehen ist, die an einer Bodenseite des wärmeabsorbierenden Wärmetauschers (3) positioniert ist,
worin die Abflußführungsrille (11) an jeder Seite in einer Breitenrichtung des Luftpfades (12) auf der Innenwand des Luftpfades vorgesehen ist, die an der Bodenseite des wärmeabsorbierenden Wärmetauschers (3) so positioniert ist, daß sie sich entlang einer Längsrichtung des Luftpfades erstreckt, und
eine Innenwand des Luftpfades zwischen den beiden Abflußführungsrillen so in den Luftpfad vorsteht, daß ein Zentralabschnitt (14) davon höher wird.

2. Klimaanlage für Fahrzeuge nach Anspruch 1, bei der der wärmeabsorbierende Wärmetauscher (3) so vorgesehen ist, daß er in einem Winkel in einem Bereich von 15 bis 30° relativ zu der Erstreckungsrichtung des Luftpfades (2) vorgesehen ist.

3. Klimaanlage für Fahrzeuge nach Anspruch 1, bei der der Zentralabschnitt (14) der Innenwand des Luftpfades (2) mit beiden Abflußführungsrillen über sanfte Neigungen verbunden ist.

4. Klimaanlage für Fahrzeuge nach einem der Ansprüche 1 bis 3, bei der ein Abschnitt (15, 16), der in den Luftpfad (2) vorsteht, auf einer Innenwand des Luftpfades, die an einer Bodenseite des wärmeabsorbierenden Wärmetauschers (3) positioniert ist, an einer Position entsprechend einer Position von sowohl einem vorderen Ende als auch einem hinteren Ende eines Gebietes vorgesehen ist, das mit dem wärmeabsorbierenden Wärmetauscher (3) vorgesehen ist.

5. Klimaanlage für Fahrzeuge nach einem der Ansprüche 1 bis 4, bei der der wärmeabsorbierende Wärmetauscher (3) ein Wärmetauscher vom Stapeltyp ist, bei dem flache Wärmeübertragungsröhren und Rippen abwechselnd gestapelt sind und beide Enden der entsprechenden Wärmeübertragungsröhre mit entsprechenden Tanks verbunden sind.

6. Klimaanlage für Fahrzeuge nach einem der Ansprüche 1 bis 5, bei der Luftausgabeöffnungen (7, 8), die mit temperaturgesteuerten Luftausgabeöffnungen in Verbindung stehen, die auf entsprechenden Teilen des Fahrzeuges vorgesehen sind, an einem stromabwärtigen Ende des Luftpfades vorgesehen sind, und sich alle Luftausgabeöffnungen ungefähr in die horizontale Richtung relativ zu dem Fahrzeug öffnen.

7. Klimaanlage für Fahrzeuge nach einem der Ansprüche 1 bis 6, bei der die Klimatisierungseinheit in einer Kabine eines Arbeitsfahrzeuges eingebaut ist.

## Revendications

1. Système de climatisation pour véhicules comprenant une unité de climatisation (1) qui comporte une voie de passage d'air (2) s'étendant dans une direction pratiquement horizontale par rapport à un véhicule, un échangeur de chaleur (3) absorbant la chaleur et un échangeur de chaleur (4) émettant la chaleur, disposés dans cet ordre dans cette voie de passage d'air, dans lequel un débit de l'air contournant ou traversant l'échangeur absorbant la chaleur par comparaison avec la quantité totale d'air traversant cet échangeur absorbant la chaleur est réglé par une porte de mélange d'air (5) afin d'obtenir une température d'air évacué souhaitée, l'échangeur émettant la chaleur (4) étant disposé de manière à présenter une inclinaison par rapport à une direction d'extension de la voie de passage d'air,
**caractérisé en ce que**
l'échangeur absorbant la chaleur (3) est disposé de manière à présenter une inclinaison de la même direction que celle de l'échangeur émettant la chaleur, et
une rainure de drainage (11) prévue au moins sur une paroi intérieure (14) de la voie de passage d'air (2), est positionnée dans le fond de l'échangeur absorbant la chaleur (3), la rainure de drainage (11) étant prévue de chaque côté dans une direction de largeur de la voie de passage d'air (12) sur la paroi intérieure de la voie de passage d'air, positionnée dans le fond de l'échangeur absorbant la chaleur (3), de manière à s'étendre le long d'une direction longitudinale de la voie de passage d'air, et une paroi intérieure de la voie de passage d'air entre les deux rainures de drainage fait saillie dans la voie de passage d'air, de sorte qu'une partie centrale (14) se trouve surélevée.

2. Système de climatisation pour véhicules selon la revendication 1, dans lequel l'échangeur absorbant la chaleur (3) forme un angle compris dans l'intervalle de 15 à 30 degrés par rapport à la direction d'extension de la voie de passage d'air (2).

3. Système de climatisation pour véhicules selon la revendication 1, dans lequel la partie centrale (14) de la paroi intérieure de la voie de passage d'air (2) est raccordée aux deux rainures de drainage par des pentes peu accentuées.

4. Système de climatisation pour véhicules selon l'une quelconque des revendications 1 à 3, dans lequel
une partie (15, 16) fait saillie dans la voie de passage d'air (2) sur une paroi intérieure de la voie de passage d'air, positionnée sur un fond de l'échangeur absorbant la chaleur (3), à un endroit correspondant à chacune des extrémités avant et arrière d'une zone adjacente à l'échangeur absorbant la chaleur (3).

5. Système de climatisation pour véhicules selon l'une quelconque des revendications 1 à 4, dans lequel
l'échangeur absorbant la chaleur (3) est un échangeur à empilement, dans lequel des tubes de transfert de chaleur plats et des ailettes sont empilés de manière alternée et les deux extrémités des tubes de transfert de chaleur respectifs sont respectivement raccordées à des réservoirs.

6. Système de climatisation pour véhicules selon l'une quelconque des revendications 1 à 5, dans lequel
des orifices d'échappement d'air (7,8) communiquent avec des orifices d'échappement d'air de température contrôlée prévus sur des pièces respectives du véhicule, sont prévus à une extrémité aval de la voie de passage d'air, et tous les orifices d'échappement d'air sont ouverts dans la direction horizontale par rapport au véhicule.

7. Système de climatisation pour véhicules selon l'une quelconque des revendications 1 à 7, dans lequel
l'unité de climatisation est installée dans une cabine d'un véhicule de travail.
